Europäisches Patentamt

European Patent Office

Office européen des brevets

(11) Publication number: **0 157 502**
A1

## (12) EUROPEAN PATENT APPLICATION

(21) Application number: 85301445.4

(51) Int. Cl.⁴: **B 64 C 27/33**, B 64 C 27/35

(22) Date of filing: 01.03.85

(30) Priority: 20.03.84 GB 8407237

(71) Applicant: **WESTLAND plc, Westland Works, Yeovil Somerset (GB)**

(43) Date of publication of application: 09.10.85 Bulletin 85/41

(72) Inventor: **Flux, Peter John, 255 Preston Road, Yeovil Somerset (GB)**

(74) Representative: **Jack, Bruce James et al, FORRESTER & BOEHMERT Widenmayerstrasse 4/I, D-8000 Munchen 22 (DE)**

(84) Designated Contracting States: **DE FR GB IT**

(54) **Helicopter rotor.**

(57) A helicopter rotor includes for each of a plurality of rotor blades (13) a radially extending connecting arm (17) flexible in a blade flap plane, each blade having inwardly extending arms (20) arranged over both side surfaces of the respective hub connecting arm with inner ends connected by a bridge member (21) engaged through an aperture (19) located adjacent an outer end of the connecting arm. A cylindrical elastomeric thrust bearing (22) is located between the bridge member and an outer edge of the aperture generally concentrically with a radially extending pitch change axis and a spigot (28) extends radially from an outer edge of the connecting arm for location in a support bearing (29) in the rotor blade.

In the illustrated embodiment, the bridge member comprises the inner bearing support ring of the cylindrical elastomeric thrust bearing.

Helicopter Rotor

This invention relates to helicopter rotors.

Helicopter rotors are known which comprise, in combination, a composite flexure member and an elastomeric blade support bearing. GB-A-1432117 discloses a helicopter rotor of this type in which each rotor blade is attached to a radially extending flat connecting arm, which is flexible in a blade flap plane, by a yoke having two arms respectively arranged over opposite sides of the connecting arm and interconnected by a bridge-like member engaged through an aperture in the base of the arm. Such an arrangement in which all blade flap movement takes place outboard of the bridge-like member dictates that an elastomeric bearing located between the bridge-like member and an edge of the aperture has to be a part-spherical bearing which is a bulky, complex and expensive assembly. Furthermore, the required length of the arms of the yoke adds to the weight of the assembly and increases its frontal area which may result in high drag loads during operation.

An objective of the invention is, therefore, to provide a rotor construction that avoids these disadvantages of the known arrangement.

Accordingly, a helicopter rotor comprising a rotor hub adapted for rotation about an axis of rotation and a plurality of rotor blades each adapted for pitch change movement about a generally radially extending axis and including, for each blade, a radially extending connecting arm flexible in a blade flap plane, each blade having inwardly extending arms arranged over both side surfaces of the respective hub connecting arm with inner ends interconnected by a bridge member engaged through an aperture in the arm, is characterised in that said aperture is located adjacent an outer end of the connecting arm, and in that the rotor includes a cylindrical elastomeric thrust bearing located between the bridge member and an outer edge of the aperture generally concentric with the pitch change axis, and a spigot extending radially from an outer edge of the connecting arm and located in a support bearing on the rotor blade.

Conveniently the bridge member comprises an inner bearing support ring of the cylindrical elastomeric bearing and an outer bearing support ring of the cylindrical elastomeric bearing is supported by the circular flange of a first support member having outwardly extending spaced-apart legs straddling the surfaces of the outer end of the connecting arm.

The flange connection may also support a radially inwardly extending bearing support spigot having an inner end located internally and spaced-apart from the inner surface of the inner bearing support ring.

Preferably, the radially extending spigot is formed on a second support member having inwardly extending spaced-apart legs straddling the legs of the first support member.

The rotor blade bearing is preferably a self lubricating bearing and may be supported in an elastomer ring.

An end stop having an inwardly facing convex surface may be located adjacent the inner surface of the aperture and conveniently may be attached to the surface of the inner bearing support ring of the cylindrical elastomeric thrust bearing.

The invention will now be described by way of example only and with reference to the accompanying drawings in which:

Figure 1 is a fragmentary part sectioned plan view of a helicopter tail rotor constructed according to the invention;

Figure 2 is a sectioned view taken along lines A-A of Figure 1.

A helicopter tail rotor generally indicated at 10 includes a rotor hub 11 adapted during operation to rotate in the direction of arrow B about an axis 12, and four rotor blades 13 (one only being shown) attached to the hub for pitch change movement about generally radially extending axes 14.

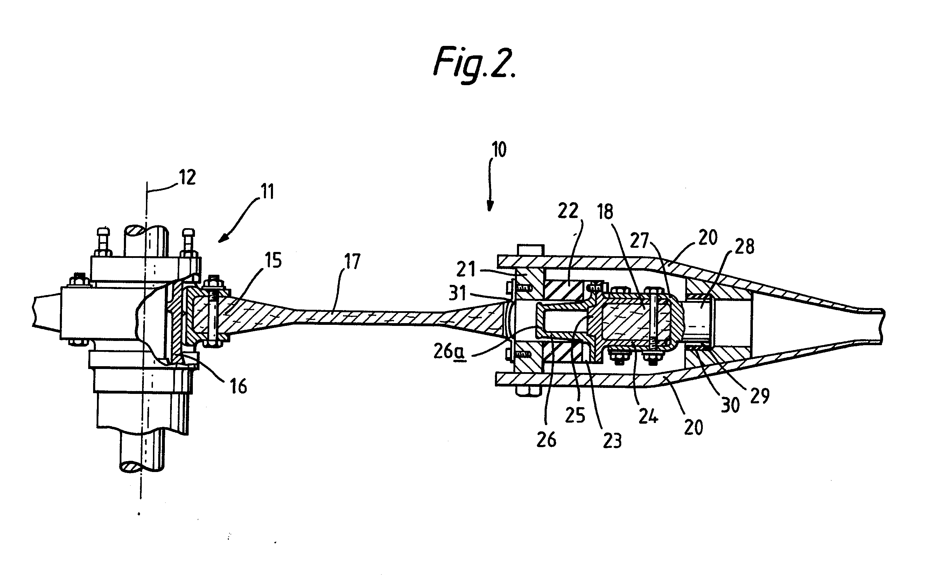

The hub 11 is an integral assembly constructed of fibre-reinforced plastics material and includes a central apertured portion 15 adapted for attachment to a rotor drive shaft 16, and four flat connecting arms 17 each terminated by an outer end portion 18 having an aperture 19 extending generally parallel to the axis of rotation 12. It will be noted from Figure 2 that in cross section each connecting arm 17 tapers in thickness downwardly and outwardly from the central portion 15 and then upwardly and outwardly in thickness inboard of the aperture 19 in the outer end portion 18.

Each rotor blade 13 includes integral spaced-apart arms 20 arranged over both sides of the outer end of the connecting arm 17 and interconnected by a bridge member comprising an inner bearing support ring 21 of a cylindrical elastomeric thrust bearing 22 located concentrically of the pitch change axis 14. An outer bearing support ring 23 is supported from an edge of aperture 19 by a circular flange of a first support member 24 having outwardly extending spaced-apart legs straddling the surfaces of the outer end 18 of the connecting arm 17.

Support member 24 has a radially inwardly extending spigot 25 serving to locate a radially inwardly extending bearing support spigot 26 having an inner end 26a located internally of and spaced-apart from the inner surface of the inner bearing support ring 21. The

4    0157502

support spigot 26 is attached through a flange portion located between the bearing support ring 23 and the flange of support member 24.

A second support member 27 includes inwardly extending spaced-apart legs straddling the surfaces of the legs of the first support member 24. The support members 24 and 27 are attached by bolts passing through mating apertures in the legs and through the material of the outer end of connecting arm 17.

The second support member 27 includes an integral radially outwardly extending spigot 28 located in a self lubricating bearing 29 mounted in an elastomer ring 30 supported in the rotor blade 13.

An end stop 31 having an inwardly facing convex surface located adjacent the inner surface of the aperture 19 is bolted to the surface of the inner bearing support ring 21, with adjustable shim (not shown) between the mated surfaces.

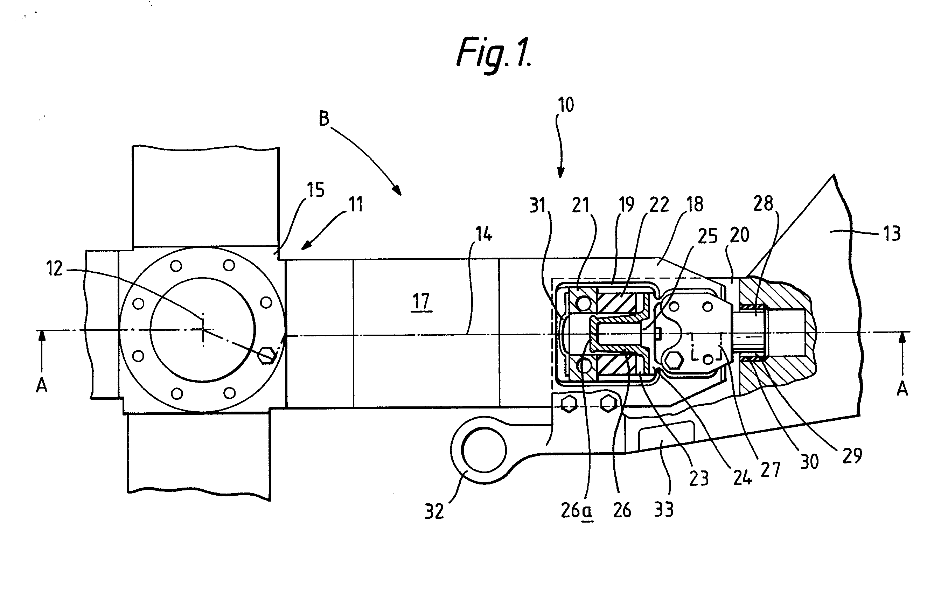

A radially inwardly extending pitch control arm 32 having an inner end adapted for attachment to flying controls (not shown) and located adjacent a leading edge of the connecting arm 17 is bolted between the inner ends of the rotor blade arms 20, and a detachable inspection panel 33 (Figure 1) is located between the arms 20 radially outwardly of the attachment of the pitch control arm 32.

In operation, centrifugal loads are transmitted through the annular elastomeric bearing 22 and the connecting arms 17 to the hub centre. Blade flap movements are permitted by bending of the flattened portion of the connecting arms 17, and takes place inboard of the bearing 22.

Pitch change movements are initiated through the pitch control arm 32 and are permitted by torsional deflections of the bearing 22. Lag and flap movements are reacted by radial loads in the bearing 22 and the self lubricating bearing 29, the thrust bearing 22 being designed so as to be capable when under centrifugal compression to react the shear loads. However, during starting and stopping and during certain "limit" flight conditions, the compression load may be insufficient to protect the bond surfaces of the bearing 22; in these circumstances overloading of the bearing 22 by deflection is prevented by contact between inner end 26a of the bearing support spigot 26 and the inner surface of the inner bearing support ring 21.

The end stop 31 prevents excessive tensile loading of the thrust bearing 22 when the rotor is at rest by abutment with the surface of aperture 19.

Thus, in the present invention, all blade flap movements take place within the central thinned down portion of the arm 17 which, being inboard of the blade attachment, enables the cylindrical type elastomeric thrust bearing 22 to be used. Such a bearing is simpler, cheaper and more compact than the part-spherical bearing of GB-A-1432117 and together with the self-lubricated bearing 29 and its location in the rotor blade 13, provides a simple and compact rotor system with good reliability, low maintenance and low drag. Furthermore, since the bearing 22 does not have to cater for flap deflections, the torsional stiffness can be minimised thus reducing control loads.

CLAIMS

1. A helicopter rotor comprising a rotor hub (11) adapted for rotation (12) about an axis of rotation and a plurality of rotor blades (13) each adapted for pitch change movement about a generally radially extending axis (14), the rotor including, for each blade, a radially extending connecting arm (17) flexible in a blade flap plane, each blade having inwardly extending arms (20) arranged over both side surfaces of the respective hub connecting arm with inner ends interconnected by a bridge member (21) engaged through an aperture (19) in the arm, characterised in that said aperture is located adjacent an outer end of the connecting arm, and in that the rotor includes a cylindrical elastomeric thrust bearing (22) located between the bridge member and an outer edge of the aperture generally concentric with the pitch change axis, and a spigot (28) extending radially from an outer edge of the connecting arm and located in a support bearing (29) on the rotor blade.

2. A rotor as claimed in Claim 1, further characterised in that the bridge member comprises an inner bearing support ring of the cylindrical elastomeric bearing.

3. A rotor as claimed in Claim 2, further characterised in that an outer bearing support ring (23) of the cylindrical bearing is supported by the circular flange of a first support member (24) having outwardly extending spaced-apart legs straddling the surfaces of the outer end of the connecting arm.

4. A rotor as claimed in Claim 3, further characterised in that the flange connection supports a radially inwardly extending bearing support spigot (26) having an inner end (26a) located internally and spaced-apart from the inner surface of the inner bearing support ring (21).

5. A rotor as claimed in Claim 3 or Claim 4, further characterised in that said radially extending spigot is formed on a second support member (27) having inwardly extending spaced-apart legs straddling the legs of the first support member.

6. A rotor as claimed in any preceding Claim, further characterised in that the rotor blade bearing is a self lubricating bearing (29) supported in an elastomer ring (30).

7. A rotor as claimed in any one of Claims 2 to 6, further characterised in that an end stop (31) having an inwardly facing convex surface located adjacent the inner surface of the aperture is attached to the surface of the inner support ring of the cylindrical elastomeric thrust bearing.

# Fig.1.

1/2

0157502

Fig.2.

0157502

European Patent
Office

EUROPEAN SEARCH REPORT

. Application number

EP 85 30 1445

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | US-A-4 012 169 (AEROSPATIALE) <br> * Column 2, lines 47-64; column 3, lines 60-68; column 4, lines 1-11, 20-30; figures 1-3 * | 1 | B 64 C 27/33 <br> B 64 C 27/35 |
| | --- | | |
| A | US-A-3 556 673 (KILIAN) <br> * Column 2, lines 6-50; column 3, line 67 - column 4, line 40; figures 1,2 * | 1 | |
| | --- | | |
| A | FR-A-2 528 794 (AGUSTA) <br> * Page 2, line 31 - page 3, line 9; page 4, lines 1-4; figure 1 * | 1 | |
| | ----- | | |

TECHNICAL FIELDS
SEARCHED (Int. Cl.4)

B 64 C

The present search report has been drawn up for all claims

| Place of search | Date of completion of the search | Examiner |
|---|---|---|
| THE HAGUE | 28-05-1985 | ZERI A. |